# EUROPEAN PATENT SPECIFICATION

(11) **EP 3 231 684 B1**
(45) Date of publication and mention of the grant of the patent: **30.12.2020**
(21) Application number: 14905293.8
(22) Date of filing: 07.11.2014
(51) Int. Cl.: B61D 29/00, F21S 8/04, B60Q 3/20

(54) **RAIL VEHICLE**
SCHIENENFAHRZEUG
VÉHICULE FERROVIAIRE

(43) Date of publication of application: 18.10.2017
(73) Proprietor: Hitachi, Ltd., Tokyo 100-8280 (JP)
(72) Inventor: FUKUHARA, Ryota, Tokyo 100-8280 (JP); YAMAMOTO, Takahisa, Tokyo 100-8280 (JP); YAMAOKA, Yasuhiro, Tokyo 100-8280 (JP)
(74) Representative: Mewburn Ellis LLP
(86) International application number: PCT/JP2014/079586
(87) International publication number: WO 2016/072016

(56) References cited:
- EP-A2- 1 702 825
- WO-A1-95/18727
- WO-A1-2013/098878
- CN-A- 102 372 008
- JP-A- H04 334 654
- JP-A- H11 192 942
- JP-A- 2006 079 918
- JP-A- 2007 137 405
- JP-A- 2011 162 085
- US-A- 2 080 960
- US-A1- 2003 173 056

## Description

### Technical Field

The present invention relates to a railway vehicle. The present invention is particularly suitable for application to a railway vehicle including a lighting system module.

### Background Art

Lighting systems included in railway vehicles are demanded to have a configuration where safety is considered, for example to prevent broken pieces from scattering when long objects such as ski boards brought inside the vehicle by a passenger hit the lighting system or to prevent a part of the lighting system melt in fire from dropping inside the vehicle.

Furthermore, a configuration considering maintainability to allow for inspection or replacement in a short time is desired. Moreover, there are cases where advertisements are posted at a boundary part between a ceiling part and a sidewall of a railway vehicle and thus it is demanded to illuminate these advertisements as well as the inside of the vehicle.

PTL 1 discloses a lighting system that illuminates inside a vehicle as well as advertisements. Specifically, a lighting system including casing body having a reflection surface reflecting downward light emitted from a light source to illuminate inside a cabin with the reflected indirect light and a receiving part that shields the downward direct light in the light emitted from the light source.

The lighting system described in PTL 1 is capable of illuminating an advertisement posted at a boundary part between a ceiling part and a sidewall with direct light directed sideways through between a lower end edge of the casing body and an upper end edge of the receiving part in the light emitted from the light source. PTL 2 proposes a lighting fitting installed at a diffuser. In particular, PTL 2 discloses a railway vehicle comprising a lighting system module, wherein the lighting system module is arranged in a vicinity of a blowout port of a conditioned air duct, and wherein the lighting system module comprises:a flow dividing plate that divides conditioned air blown out from the blowout port; anda casing arranged below the flow dividing plate and accommodating a light emitting part.

### Citation List

### Patent Literature

PTL 1: JP 2013-91472 A
PTL 2: JP H04 334654 A

### Summary of Invention

### Technical Problem

Meanwhile, in order to manufacture a railway vehicle with less man-hours, means are taken such as reducing man-hours for attachment by consolidating parts that are conventionally attached separately into a single group of parts or reducing the number of parts by consolidating functions of parts that are conventionally arranged in a distributed manner for each of the functions into a single part.

A ceiling part of a railway vehicle is arranged with a ceiling panel, a blowout port for conditioned air, a lighting system, and other objects. A cabin of a railway vehicle has a larger dimension in the longitudinal direction (direction of rails) as compared to dimensions in the width direction (direction of railroad ties) and the height direction and thus there is a need for fine adjustment of a blowing direction or the flow rate of conditioned air in order to provide well-balanced temperature distribution in the cabin.

The lighting system described in PTL 1 merely discloses solely a configuration of the lighting system and thus has issues regarding points of reducing the number of parts by consolidating parts arranged at the ceiling part and functions, attaching or inspecting or adjusting the flow rate of conditioned air by less man-hours.

The present invention has been devised in consideration to the above points and proposes a railway vehicle including a lighting system module capable of reducing man-hours and improving maintainability while maintaining safety.

### Solution to Problem

In order to solve the above issues, in the present invention a railway vehicle includes a lighting system module. The lighting system module is arranged in a vicinity of a blowout port of a conditioned air duct and includes a flow dividing plate that divides conditioned air blown out from the blowout port and a casing arranged below the flow dividing plate and accommodating a light emitting part. The flow dividing plate includes a mounting part at an end portion thereof in a width direction. The casing includes a locking part at an end portion thereof in the width direction and, when securing of the casing is released, develops downward with the locking part serving as a fulcrum while the locking part is mounted to the mounting part.

### Advantageous Effects of Invention

The present invention allows for reducing man-hours and improving maintainability while maintaining safety.

### Brief Description of Drawings

[FIG. 1] FIG. 1 is a cross-sectional configuration diagram of a railway vehicle in a longitudinal direction.
[FIG. 2] FIG. 2 is an enlarged cross-sectional configuration diagram of a ceiling module.
[FIG. 3] FIG. 3 is an enlarged cross-sectional configuration diagram of a lighting system module.
[FIG. 4] FIG. 4 is an enlarged cross-sectional configuration diagram of the developed lighting system module.
[FIG. 5] FIG. 5 is a perspective configuration diagram of the developed lighting system module.
[FIG. 6] FIG. 6 is a cross-sectional configuration diagram of a casing forming the lighting system module.

### Description of Embodiments

An embodiment of the present invention will be described below in detail with reference to the drawings. Note that a railway vehicle is a general term for transportation vehicles that travels along a laid rail, including railway vehicles, streetcars, automated guideway transit vehicles, and monorail vehicles. Hereinafter an example of railway vehicle will be described.

### (1) Configuration of railway vehicle

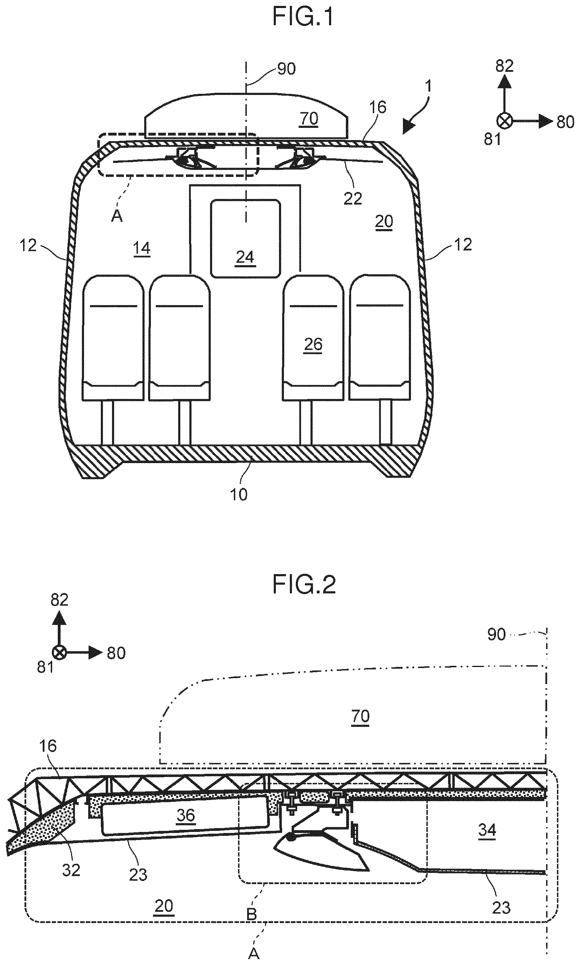

FIG. 1 is a cross-sectional configuration diagram of a railway vehicle 1 of the present embodiment in a longitudinal direction. First, directions related to the railway vehicle 1 will be defined. Three directions related to the railway vehicle 1 are a vehicle body (of the railway vehicle 1) width direction 80, a vehicle body longitudinal direction 81, and a vehicle body height direction 82. Hereinafter these may be simply referred to as the width direction 80, the longitudinal direction 81, and the height direction 82.

The railway vehicle 1 has a cabin 20 of a box shape having six surfaces formed by: an underframe 10 forming a floor surface; side structures 12 vertically arranged at both end portions of the underframe 10 in the width direction 80; end structures 14 arranged at both end portions of the underframe 10 in the longitudinal direction; and a roof structure 16 arranged at upper end portions of the end structures 14 and the side structures 12.

The end structure 14 is installed with a through door 24 for moving to another railway vehicle 1 adjacent thereto in the longitudinal direction 81. Inside the cabin 20 seats 26, tables (not illustrated), or other items are installed.

An outer side of the vehicle of the roof structure 16 is installed with an air conditioner 70 that generates conditioned air and conditions a temperature and humidity environment inside the railway vehicle 1. An inner side of the vehicle of the roof structure 16 is installed with a ceiling module A having a duct that sends conditioned air to respective parts of the vehicle body of the railway vehicle 1, a ceiling panel, and other objects.

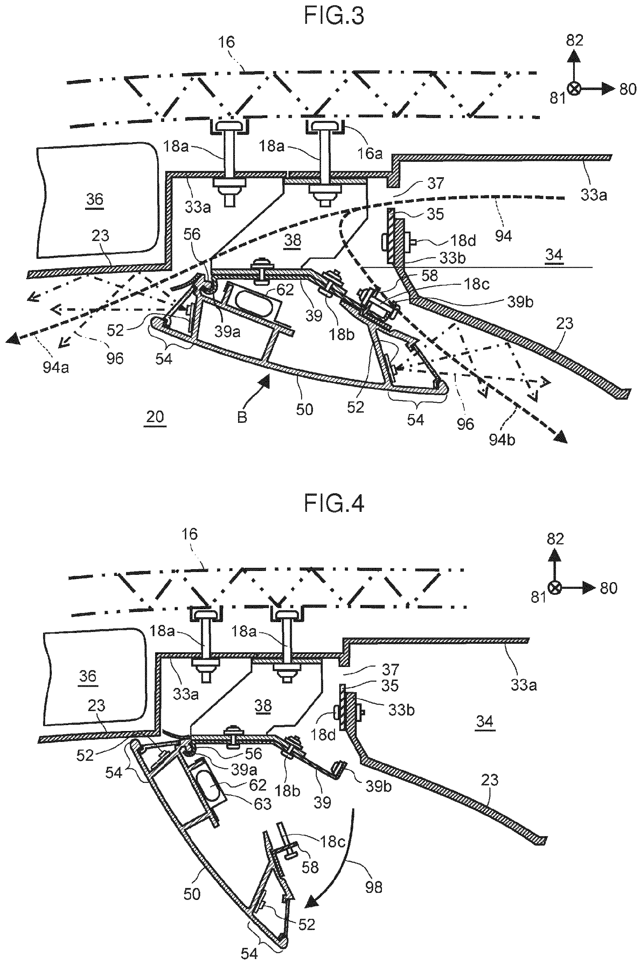

The ceiling module A has a plane symmetry configuration with respect to a central cross-section including a central line 90 in the width direction 80. Hereinafter one of the ceiling modules A (FIG. 2) and a lighting system module B (FIG. 3) included in the ceiling module A will be described.

### (2) Configuration of ceiling module

FIG. 2 is a diagram illustrating an enlarged cross-sectional configuration of a ceiling module A. The ceiling module A is a member installed on the inner side of the vehicle of the roof structure 16. The ceiling module A includes a heat insulator 32 that suppresses transfer of heat between the outside and the inside of the vehicle, a conditioned air duct 34 arranged at a central portion in the width direction 80 along the longitudinal direction 81, an exhaust air duct 36 arranged at both end portions in the width direction 80 along the longitudinal direction 81, and the lighting system module B including a ceiling panel 23 and a lighting system.

Note that the roof structure 16 is formed by a hollow extruded member made of aluminum alloy where two face plates opposite to each other are connected by a plurality of ribs. The underframe 10 and the side structure 12 are also configured in a similar manner.

### (3) Configuration of lighting system module

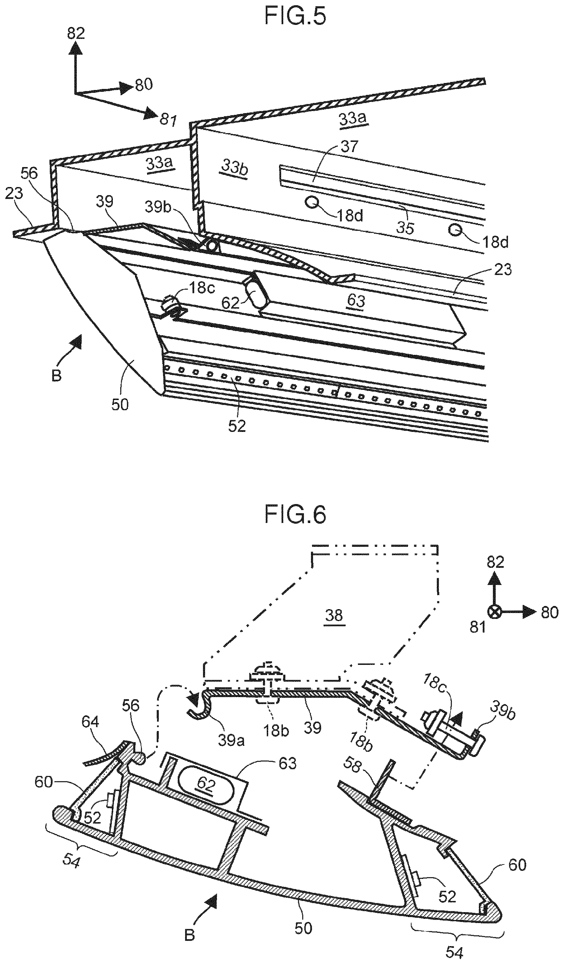

FIG. 3 is a diagram illustrating an enlarged cross-sectional configuration of the lighting system module B. FIG. 4 is a diagram illustrating an enlarged cross-sectional configuration of the lighting system module B in a developed state. FIG. 5 is a diagram illustrating a perspective configuration of the lighting system module B in a developed state. FIG. 6 is a diagram illustrating a cross-sectional configuration of a casing forming the lighting system module B. The configuration of the lighting system module B will be described below with reference to FIGS. 3 to 6.

Conditioned air generated by the air conditioner 70 is pressure-fed to the conditioned air duct 34 by an indoor blower (not illustrated) . The conditioned air duct 34 includes a duct wall 33a arranged substantially horizontal in the vicinity of the roof structure 16, the ceiling panel 23, and a duct wall 33b connecting the duct wall 33a and the ceiling panel 23 and arranged substantially vertically.

The duct wall 33a is fixed to the roof structure 16 by a bolt 18a a head portion thereof inserted to a slot 16a formed by extrusion integrally with the hollow extruded member forming the roof structure 16.

The duct wall 33b is formed with openings 37 discretely along the longitudinal direction 81. The opening 37 is arranged with a flow rate adjusting plate 35 an opening ratio thereof is desirably set to adjust a flow rate of conditioned air supplied inside the cabin 20 from the conditioned air duct 34.

The flow rate adjusting plate 35 is fixed to the duct wall 33b by a bolt 18d. A flow rate of conditioned air 94 can be desirably adjusted by developing a casing 50 downward in a direction of an arrow 98 with a locking part 56 serving as a fulcrum and then loosening the bolt 18d to adjust a position of the flow rate adjusting plate 35 in the height direction 82.

The lighting system module B includes the casing 50 holding a light emitting part 52 or a battery 62 that supplies power to the light emitting part 52 in an emergency and a flow dividing plate 39 supporting the casing 50 in a developable manner and dividing, in the width direction 80, conditioned air supplied inside the cabin 20 from the openings 37.

A cross-sectional shape of the flow dividing plate 39 crossing the longitudinal direction 81 is gently inclined downward at one end portion thereof in the width direction 80. A cross-sectional shape of the casing 50 crossing the longitudinal direction 81 is arc-shaped with both end portions of a lower surface thereof in the width direction lifted upward.

A cross-sectional shape of the lighting system module B including the casing 50 below the flow dividing plate 39 is overall substantially trapezoidal where an upper side is shorter than a lower side and the lower side has an arc shape convex downward.

One end portion of the flow dividing plate 39 in the width direction 80 is formed with a mounting part 39a where the locking part 56 arranged at one end portion of the casing 50 is mounted. The flow dividing plate 39 forming the lighting system module B is connected and fixed to one end of a bracket 38 by the bolt 18b.

The other end of the bracket 38 is connected and fixed to the slot 16a of the roof structure 16 via the bolt 18a. The brackets 38 support the lighting system module B discretely along the longitudinal direction 81. The brackets 38 are arranged at predetermined intervals.

At the other end portion of the casing 50 a latch plate 58 is fixed. The latch plate 58 is connected to an engaging part 39b provided to the other end portion of the flow dividing plate 39 by a bolt 18c. The engaging parts 39b are discretely provided along the longitudinal direction 81 at predetermined intervals (FIG. 5).

The engaging part 39b may be formed integrally with the flow dividing plate 39 by bending processing of the other end portion of the flow dividing plate 39. Alternatively, an engaging part 39b prepared as a separate part may be fixed to the flow dividing plate 39 by spot welding, a rivet, or other means. Removing the bolt 18c allows for developing the casing 50 in the direction of the arrow 98 with the locking part 56 serving as a fulcrum (FIG. 4).

Among both end portions of the lighting system module B in the width direction 80 and the ceiling panel 23 a passage of the conditioned air 94 is formed. The conditioned air 94 is divided into conditioned air 94a directed toward the side structure 12 from the openings 37 and conditioned air 94b directed toward the central portion of the cabin 20 in the width direction 80.

The casing 50 forming the lighting system module B is manufactured by extrusion of aluminum alloy or incombustible resin. The both end portions of the casing 50 in the width direction 80 are formed with an accommodating part 54 accommodating the light emitting part 52. An opening of the accommodating part 54 used for installment, inspection, or other activities of the light emitting part 52 is closed by a protection cover 60 having transparency such as polycarbonate resin in a manner allowing for opening and closing.

The light emitting part 52 includes a plurality of LED elements arrayed at substantially equal intervals on a component side surface of a substrate extending in a narrow shape. The other surface of the substrate is formed with a wiring circuit electrically connecting the LED elements and fixed to the accommodating part 54 of the casing 50. Light trajectories 96 emitted from the light emitting part 52 are transmitted by the protection cover 60, reflected by the ceiling panel 23, and then diffuses. The reflected light indirectly illuminates inside the cabin 20.

### (4) Effects by present embodiment

In this manner, the lighting system module B having a substantially trapezoidal cross-sectional shape is arranged in a downstream passage of the openings 37 of the conditioned air duct 34 in the present embodiment. This allows for dividing the conditioned air 94 supplied inside the cabin 20 into the conditioned air 94a and 94b. The conditioned air 94a and 94b flow along a surface of the ceiling panel 23 and this allows for suppressing unpleasant draft directly exposing a passenger to blown-out conditioned air.

The lower side of the casing 50 having a high strength is facing the cabin 20 side over a wide range and thus even when luggage such as ski boards brought in the cabin 20 by a passenger hits the lighting system module B breakage of the protection cover 60 and the light emitting part 52 can be suppressed.

Furthermore, the accommodating part 54 of the casing 50 holds broken pieces of the protection cover 60 or a melt subject should the protection cover 60 break or the light emitting part 52 melt due to heat of electric short circuit or other reasons. This allows for suppressing scattering of the protection cover 60 or dropping of a melt substance.

The accommodating part 54 is arranged at the both end portions of the substantially trapezoidal shape in the width direction 80 and the accommodating part 54 accommodates the light emitting part 52 to allow light from the light emitting part 52 to be reflected by the ceiling panel 23. This allows for implementing indirect lighting.

Furthermore, the locking part 56 of the casing 50 is locked to the mounting part 39a provided to the flow dividing plate 39 to achieve a configuration where the casing 50 can be developed downward with the locking part 56 serving as a fulcrum. This allows for adjusting the flow rate of the conditioned air 94 by the flow rate adjusting plate 35 without detaching the casing 50 from the ceiling module A. This allows for easily adjusting an air flow distribution of the railway vehicle 1 with less maintenance man-hours.

Moreover, the battery 62 can be easily inspected by opening the inspection lid 63 holding the battery 62 included in the casing 50 without detaching the casing 50.

The casing 50 is manufactured by extrusion of aluminum alloy having a high thermal conductivity and the casing 50 is arranged in the passage of the conditioned air 94 with the accommodating part 54 of the casing 50 including the light emitting part 52. This allows for efficiency removing heat of the light emitting part 52 via the casing 50, thereby allowing for suppressing promotion of deterioration of the light emitting part 52. As a result of this, a longer life of the light emitting part 52 is promoted, thereby allowing for suppressing maintenance cost.

### Reference Signs List

- 1: railway vehicle
- 16: roof structure
- 20: cabin
- 22: ceiling part
- 23: ceiling panel
- 34: conditioned air duct
- 35: flow rate adjusting plate
- 37: opening
- 38: bracket
- 39: flow dividing plate
- 39a: mounting part
- 50: casing
- 52: light emitting part
- 54: accommodating part
- 56: locking part
- 58: latch plate
- 60: protection cover
- 62: battery
- 63: inspection lid
- 70: air conditioner
- 80: width direction
- 81: longitudinal direction
- 82: height direction
- 94: flow of conditioned air
- 96: trajectory of a ray of light
- A: ceiling module
- B: lighting system module

## Claims

1. A railway vehicle (1) comprising a lighting system module (B),
wherein the lighting system module (B) is arranged in a vicinity of a blowout port of a conditioned air duct (34),
the lighting system module (B) comprises:
a flow dividing plate (39) that divides conditioned air blown out from the blowout port; and
a casing (50) arranged below the flow dividing plate (39) and accommodating a light emitting part (52), **characterized in that**:
the flow dividing plate (39) comprises a mounting part (39a) at an end portion thereof in a width direction, and
the casing (50) comprises a locking part (56) at an end portion thereof in the width direction and, when securing of the casing (50) is released, develops downward with the locking part (56) serving as a fulcrum while the locking part (56) is mounted to the mounting part (39a).

2. The railway vehicle (1) according to claim 1,
wherein the conditioned air duct (34) comprises, at the blowout port, a flow rate adjusting plate (35) that adjusts an opening ratio of the blowout port.

3. The railway vehicle (1) according to claim 2,
wherein a cross-sectional shape of the lighting system module (B) crossing a longitudinal direction is substantially trapezoidal with an upper side shorter than a lower side and the lower side has an arc shape convex downward.

4. The railway vehicle (1) according to claim 3,
wherein the casing (50) comprises:
an accommodating part (54) that accommodates the light emitting part (52) at each of both end portions thereof in the width direction; and
a protection member that protects the light emitting part (52) accommodated in the accommodating part (54).

5. The railway vehicle (1) according to claim 4,
wherein the flow dividing plate (39) divides the conditioned air into a flow directed toward a central portion in the width direction and a flow directed toward an end portion.

6. The railway vehicle (1) according to claim 5,
wherein the casing (50) is a shape material formed by extrusion of aluminum alloy,
the light emitting part (52) includes an LED element arranged on one surface of a substrate and wiring arranged on the other surface of the substrate, and
heat of the light emitting part (52) is removed by the conditioned air via the casing (50).

7. The railway vehicle (1) according to claim 6,
wherein light emitted from the light emitting part (52) is reflected by a ceiling panel (23) arranged in a vicinity of the lighting system module (B) and then illuminates inside the railway vehicle (1).

## Patentansprüche

1. Schienenfahrzeug (1), das ein Beleuchtungssystemmodul (B) umfasst,
wobei das Beleuchtungssystemmodul (B) in der Nähe einer Ausblaseöffnung einer Leitung (34) für klimatisierte Luft angeordnet ist,
wobei das Beleuchtungssystemmodul (B) Folgendes umfasst:
eine Strömungsteilungsplatte (39), die aus der Ausblaseöffnung ausgeblasene klimatisierte Luft teilt; und
ein Gehäuse (50), das unterhalb der Strömungsteilungsplatte (39) angeordnet ist und einen Licht emittierenden Teil (52) aufnimmt,
**dadurch gekennzeichnet, dass**:
die Strömungsteilungsplatte (39) einen Befestigungsteil (39a) an einem Endabschnitt derselben in einer Breiterichtung umfasst, und
das Gehäuse (50) einen Verriegelungsteil (56) an einem Endabschnitt desselben in der Breiterichtung umfasst und sich, wenn die Befestigung des Gehäuses (50) gelöst wird, nach unten ausweitet, wobei der Verriegelungsteil (56) als Drehpunkt fungiert, während der Verriegelungsteil (56) an dem Befestigungsteil (39a) befestigt ist.

2. Schienenfahrzeug (1) nach Anspruch 1,
wobei die Leitung (34) für klimatisierte Luft an der Ausblaseöffnung eine Strömungsrateneinstellplatte (35) umfasst, die einen Öffnungsanteil der Ausblaseöffnung einstellt.

3. Schienenfahrzeug (1) nach Anspruch 2,
wobei eine Querschnittsform des Beleuchtungssystemmoduls (B), die eine Längsrichtung schneidet, im Wesentlichen trapezförmig ist, wobei eine obere Seite kürzer ist als eine untere Seite und wobei die untere Seite eine nach unten gerichtete konvexe Bogenform aufweist.

4. Schienenfahrzeug (1) nach Anspruch 3,
wobei das Gehäuse (50) Folgendes umfasst:
einen Aufnahmeteil (54), der den Licht emittierenden Teil (52) an jedem der beiden Endabschnitte desselben in der Breiterichtung aufnimmt; und
ein Schutzelement, das den Licht emittierenden Teil (52), der in dem Aufnahmeteil (54) aufgenommen ist, schützt.

5. Schienenfahrzeug (1) nach Anspruch 4,
wobei die Strömungsteilungsplatte (39) die klimatisierte Luft in eine Strömung, die in Richtung eines zentralen Abschnitts in der Breiterichtung ausgerichtet ist, und eine Strömung, die in Richtung eines Endabschnitts ausgerichtet ist, teilt.

6. Schienenfahrzeug (1) nach Anspruch 5,
wobei das Gehäuse (50) ein Formmaterial ist, das durch die Extrusion einer Aluminiumlegierung gebildet wird,
der Licht emittierende Teil (52) ein LED-Element, das auf einer Oberfläche eines Substrats angeordnet ist, und Leitungen, die auf der anderen Oberfläche des Substrats angeordnet sind, umfasst; und
Wärme des Licht emittierenden Teils (52) durch die klimatisierte Luft über das Gehäuse (50) abgeführt wird.

7. Schienenfahrzeug (1) nach Anspruch 6,
wobei das von dem Licht emittierenden Teil (52) emittierte Licht durch eine Deckenplatte (23) reflektiert wird, die in der Nähe des Beleuchtungssystemmoduls (B) angeordnet ist, und dann das Innere des Schienenfahrzeugs (1) beleuchtet.

## Revendications

1. Véhicule ferroviaire (1) comprenant un module de système d'éclairage (B),
dans lequel le module de système d'éclairage (B) est agencé à proximité d'un orifice de soufflage d'un conduit d'air conditionné (34),
le module de système d'éclairage (B) comprend :
une plaque de division d'écoulement (39) qui divise de l'air conditionné soufflé depuis le port de soufflage ; et
un boîtier (50) disposé au-dessous de la plaque de division d'écoulement (39) et logeant une partie émettrice de lumière (52),
**caractérisé en ce que** :
la plaque de division d'écoulement (39) comprend une partie de montage (39a) au niveau d'une partie d'extrémité de celle-ci dans une direction de largeur, et
le boîtier (50) comprend une partie de verrouillage (56) au niveau d'une partie d'extrémité de celui-ci dans la direction de largeur et, lorsque la fixation du boîtier (50) est libérée, se développe vers le bas avec la partie de verrouillage (56) servant de point d'appui alors que la partie de verrouillage (56) est montée sur la partie de montage (39a).

2. Véhicule ferroviaire (1) selon la revendication 1, dans lequel le conduit d'air conditionné (34) comprend, au niveau de l'orifice de soufflage, une plaque d'ajustement de débit (35) qui ajuste un rapport d'ouverture de l'orifice de soufflage.

3. Véhicule ferroviaire (1) selon la revendication 2, dans lequel une forme en coupe transversale du module de système d'éclairage (B) entrecoupant une direction longitudinale est sensiblement trapézoïdale avec un côté supérieur plus court qu'un côté inférieur et le côté inférieur a une forme d'arc convexe vers le bas.

4. Véhicule ferroviaire (1) selon la revendication 3, dans lequel le boîtier (50) comprend :
une partie de logement (54) qui loge la partie émettrice de lumière (52) au niveau de chacune des deux parties d'extrémité de celle-ci dans la direction de largeur ; et
un élément de protection qui protège la partie émettrice de lumière (52) logée dans la partie de logement (54).

5. Véhicule ferroviaire (1) selon la revendication 4, dans lequel la plaque de division d'écoulement (39) divise l'air conditionné en un écoulement dirigé vers une partie centrale dans la direction de largeur et en un écoulement dirigé vers une partie d'extrémité.

6. Véhicule ferroviaire (1) selon la revendication 5, dans lequel le boîtier (50) est un matériau de forme formé par extrusion d'alliage d'aluminium,
la partie émettrice de lumière (52) comprend un élément LED disposé sur une surface d'un substrat et un câblage disposé sur l'autre surface du substrat, et
de la chaleur de la partie émettrice de lumière (52) est éliminée par l'air conditionné via le boîtier (50).

7. Véhicule ferroviaire (1) selon la revendication 6, dans lequel de la lumière émise par la partie émettrice de lumière (52) est réfléchie par un panneau de plafond (23) disposé à proximité du module de système d'éclairage (B) puis éclaire l'intérieur du véhicule ferroviaire (1).
